# EUROPÄISCHE PATENTSCHRIFT

(11) **EP 1 767 377 B1**
(45) Veröffentlichungstag und Bekanntmachung des Hinweises auf die Patenterteilung: **17.09.2008**
(21) Anmeldenummer: 06016680.8
(22) Anmeldetag: 10.08.2006
(51) Int. Cl.: B41M 5/30, B32B 27/32

(54) **Individuell markierbare Polymerfolie, Verfahren zu deren Herstellung und zugehörige Produkte**
Individually markable polymeric foils, methods for their preparation and the resulting products.
Feuilles polymériques pour marquage individuel, méthodes pour leur fabrication et produits resultants

(30) Priorität: 27.09.2005 DE 102005046272
(43) Veröffentlichungstag der Anmeldung: 28.03.2007
(73) Patentinhaber: Wipak Walsrode GmbH & Co. KG, 29699 Bornlitz (DE)
(72) Erfinder: Jacobsen, Sven, Dr, 29683 Bad Fallingbostel (DE); Ahrens, Adolf, 27336 Häuslingen (DE); Kinzer, Thomas, 27299 Langwedel (DE); Koppers, Markus, Dr, 29683 Bad Fallingbostel (DE)
(74) Vertreter: Läufer, Martina

(56) Entgegenhaltungen:
- EP-A- 0 600 441
- EP-A- 0 993 964
- WO-A-02/068192

## Beschreibung

Die Erfindung betrifft eine mehrschichtig aufgebaute Polymerfolie, die ein individuelles Markieren oder Beschriften mit dieser Folie hergestellter Produkteinheiten ermöglicht, ein Verfahren zu ihrer Herstellung und ein zugehöriges unter Verwendung der Folie erzeugtes Produkt. Insbesondere kann die Folie eine Verpackungsfolie sein, mit der das individuelle Beschriften von Verpackungen an der Verpackungsmaschine oder später durchgeführt werden kann.

Kunststoff-Verpackungen oder Kunststoff enthaltende Verpackungen sind heute für viele Produkte im Einsatz. Hierbei werden sogenannte Verpackungsfolien vielfältig eingesetzt, die häufig aus thermoplastischen Polymeren bestehen und ein- oder mehrschichtig sein können. Es gibt Verpackungen, die vollständig aus Verpackungsfolie hergestellt sind, wie z.B. Schlauchbeutel, und solche die nur teilweise aus Folie bestehen, wie z.B. steife Mulden aus Kunststoffen oder Pappe, die mit einem Foliendeckel versehen werden. Schließlich gibt es Folienumverpackungen um beliebige andere Verpackungen, z.B. Pappkartons.

Die heute üblichen Folien werden in den meisten Fällen bedruckt. Dafür geeignete Verfahren und Druckfarben sind allgemein bekannt (Verpackungsdruck).

Ebenfalls bekannt ist es, an Folienverpackungen bzw. Folienbereichen von Materialverbund-Verpackungen zusätzliche verpackungsspezifische Aufdrucke (Beschriftungen, Markierungen, Bilder, Logos) anzubringen. Hierzu zählen u.a. Informationen zur Produkt Charge, das Herstellungs- und Verpackungsdatum, das Verfallsdatum, Angaben zum Hersteller, zum Herstellungs- oder Verpackungsort usw. Ein solcher Aufdruck kann auch codiert vorliegen.

Mit dem nachträglichen verpackungsspezifischen Bedrucken sind verschiedene Probleme verbunden. In der Praxis werden verpackungsspezifische Beschriftungen und Markierungen im Zuge des Verpackungsvorgangs auf die Folie von außen aufgedruckt. Die fertig vorbereitete, bedruckte Verpackungsfolie kann innerhalb eines geschützt unter wenigstens einer Deckschicht liegenden Druckbildes keine verpackungsspezifischen Angaben enthalten, da diese Folie lange vor dem Verpackungsvorgang vorbereitet, d.h. fertig bedruckt wird. Das nachträgliche Aufdrucken mit Druckfarbe ist jedoch für den Verpackungsbetrieb dann aufwendig, wenn der Druck einer bestimmten Qualität entsprechen soll. Die Drucke werden daher nur mit einfacher schwarzer Druckfarbe, z.B. im Thermotransferdruck (Tintenstrahldruck) vorgenommen und erscheinen häufig unklar oder schlecht leserlich. Ein gravierendes Problem besteht auch darin, dass die von außen aufgedruckten Beschriftungen - z.B. gerade auch das Verfallsdatum - durch Kratzen auf der Außenseite der Folie und ggf. Nachbeschriften verändert und die Angaben so manipuliert werden können.

Es ist bekannt, dass Beschriftungen oder Markierungen auf thermoempfindlichen Farbbildungsschichten, z.B. Thermopapier, mit Laserlicht vorgenommen werden können. Für derartigen Anwendungen sind in der Papierindustrie spezielle Leukofarbstoffe entwickelt worden, die im Grundzustand farblos sind und bei Bestrahlung in einem bestimmten Wellenlängenbereich eine Farbigkeit (einschlieβlich schwarz) entwickeln. Laserentwickelbare Papierbeschichtungen sind beispielsweise aus der EP 600 441 B1 bekannt.

Die WO-A- 02 068192 zeigt ein lasermarkierbares Laminat aus einer mehrschichtigen transparenten und einer mehrschichtigen opaken Folie mit Zwischenschicht, wobei die transparente Folie in ihrer Basisschicht ein laserveränderbares Pigment enthält.

Ferner sind anorganische Pigmente bekannt, die in entsprechender Weise bei Bestrahlung einen Farbumschlag erleiden. Unter einem laserentwickelbaren Farbstoff werden im Folgenden sowohl organische Farbstoffe als auch anorganische Pigmente zusammengefasst, die unter Laserlicht jeweils ihren Farbzustand ändern.

Aus der WO 02/068192 ist ein Folienlaminat bekannt, das eine transparente Folienschicht mit einem Laserlicht absorbierenden Zusatz enthält. Bei dem Zusatz handelt es sich vorzugsweise um ein Pigment, und zwar einen Glimmer (SiO₂).

Die Markierung erfolgt mit einem Laser zwischen 300 und 10000 nm durch die darüber liegende Deckschicht bis in die mit dem Zusatzstoff versehene Schicht hinein. Hierdurch wird eine Markierung vor einem vorzugsweise weißen Hintergrund erzeugt. Ohne Zwischenschichten, besondere Oberflächen-Glanzbehandlungen oder opake Hintergrundschichten mit mittlerem, gerade richtigem Weißungsgrad besitzen die erzeugten Markierungen jedoch einen schlechten Kontrast und damit eine schlechte "Druckqualität". Die Lasermarkierung, die potentiell für eine verpackungsspezifische Markierung nutzbar wäre, zwingt daher der Verpackungsfolie zahlreiche Einschränkungen bezüglich der Eigenschaften von im Verbund erforderlichen Einzelschichten auf, sie ist also nicht unabhängig auf jeder gewünschten Verpackungsfolie nutzbar. Da die verpackten Füllgüter selbst unterschiedliche Anforderungen an die sie umgebende Folie stellen und den Foliengrundaufbau dadurch mitbestimmen, limitiert die lasermarkierbare Schicht den Folienaufbau zusätzlich in unerwünschter Weise.

Aus der WO 02/068192 zeigt sich auch, dass Bedenken gegen eine Lasermarkierung von Kunststoff Folien, die in der Regel wenigstens teilweise aus thermoplastischen Polymeren bestehen, berechtigt sind. Wie anzunehmen ist, besteht die Gefahr, dass der Laserstrahl die Folie zu sehr erweicht, verformt, allgemein schädigt oder sogar zerschneidet. Dementsprechend wird in der WO 02/068192 von einem besonders gut kontrollierbaren Reißverhalten entlang der Lasermarkierung berichtet, die eine Verwendung als Easy-Opening Folie nahe legen soll. Ferner wird berichtet, dass der Laserstrahl an der Stelle des Auftreffens auch eine Erhebung auf der an sich glatten Oberfläche des Laminats erzeugt. Dies wird zwar als Vorteil dargestellt, da es die Herstellung von Blindenschrift ermöglicht, im Normalfall wird jedoch weder das Reißverhalten noch die Erhebungen durch den Laserstrahl, die die glatte Oberfläche stören, für die hier anzustrebende individuelle Produktbeschriftung gewünscht sein. Die Laminate nach der WO 02/068192 sind daher u.a. für Standardbeschriftungen oder Standardmarkierungen an bestehenden beliebig aufgebauten Verpackungsfolien unbrauchbar.

Ein weiterer Nachteil ist der sehr hohe Preis einer solchen Verpackungsfolie, der sich durch die notwendigen Zusatzstoffe und Behandlungsschritte zur Kontraststeigerung erklärt.

Die Aufgabe der Erfindung besteht daher darin, an einer Polymerfolie, insbesondere einer Verpackungsfolie praktisch beliebigen Grundaufbaus, eine nachträgliche, produkt-spezifische Beschriftung oder Markierung zu ermöglichen, wobei die im Stand der Technik vorhandenen Einzelbeschriftungsnachteile vermieden werden sollen und die Beschriftung ohne Zerstören des Produkts bzw. der Verpackung nicht entfernbar oder veränderbar sein soll.

Diese Aufgabe wird gelöst mit Hilfe einer Polymerfolie, die mehrschichtig aufgebaut ist, mit einer teilflächigen Beschichtung wenigstens einer Folienschicht mit einer laserentwickelbaren Druckfarbe, die einen laserempfindlichen Farbstoffenthält, der durch Bestrahlung bei Wellenlänge zwischen 400 und 12000 nm einen Farbumschlag erleidet, und die ein Bindemittel enthält, als Konterdruck hinter einer transparenten Polymerdeckschicht.

Im Rahmen der Erfindung wurde gefunden, dass die Unbrauchbarkeit der oben genannten Folie nicht generell dazu führen muss, dass Kunststoff-Folien nicht lasermarkierbar sind, sondern dass die dort auftretenden Nachteile im Wesentlichen mit der Verteilung des laserempfindlichen Farbstoffs in der Folienschicht verbunden sind. Die schlechte Druckqualität und Kontrastarmut wird u.a. durch die Verteilung des Pigmentes in der Folienschicht bewirkt. Bei der Erfindung dagegen wird der laserempfindliche Farbstoff bzw. das Pigment in der laserempfindlichen Druckfarbe konzentriert und nur gezielt teilflächig (beispielsweise in Form eines begrenzten Feldes oder einer gewählten Druckform) in Zuordnung zu einer Druck- oder Steuermarkierung aufgebracht. Die konzentriert an einer Position eingebrachte laserentwickelbare Druckfarbe kann so gezielter und effektiver verändert werden, ohne dass das umgebende Material mehr als notwendig in Mitleidenschaft gezogen wird.

Polymerfolie, die mehrschichtig aufgebaut ist, mit einer teilflächigen Beschichtung wenigstens einer Folienschicht mit einer laserentwickelbaren Druckfarbe, die einen laserempfindlichen Farbstoff enthält, der durch Bestrahlung bei Wellenlänge zwischen 400 und 12000 nm einen Farbumschlag erleidet, und die ein Bindemitttel enthält, als Konterdruck hinter einer transparenten Polymerdeckschicht.

Sofern die laserentwickelbare Druckfarbe im nicht-entwickelten Zustand farblos bzw. innerhalb der Polymerfolie optisch nicht erkennbar ist, kann die Folie nur dann beschriftet werden, wenn der Beschriftende (z.B. der Verpackungsbetrieb oder ein Hersteller fälschungssicherer Dokumente und Karten) erstens die Zuordnungsbeziehung zwischen Steuermarkierung bzw. Druckmarkierung und mit der laserentwickelbaren Druckfarbe beschichteter Fläche sowie zweitens die Energie- und Wellenlängenbedingungen für die Farbstoffentwicklung kennt. Die erfindungsgemäße Folie kann daher fälschungssicher ausgestaltet werden, wenn diese Parameter zwischen Folienproduzent und Weiterverarbeiter geheim gehalten werden.

Unter einer laserentwickelbaren Druckfarbe wird hier eine Mischung verstanden, die nach Art einer Verpackungsdruckfarbe für Kunststoffe aufgebaut ist oder auf einer herkömmlichen Druckfarbe basiert und einen laserentwickelbaren Farbstoff in Form eines organischen Farbstoffs oder eines anorganischen Pigments enthält. Der Farbstoff geht bei Bestrahlen mit Licht eines bestimmten Wellenlängenbereichs von einer farblosen oder farblich helleren Form (Leuko-Form) in eine gefärbte bzw. mit der Leuko-Form stark kontrastierende, d.h. im Allgemeinen mehrere Farbstufen dunklere gefärbte Form über.

Eine laserentwickelbare Druckfarbe ist demnach eine Druckfarbe, die wenigstens einen laserentwickelbaren Farbstoff (z. B. Leuko-Farbstoff) enthält, wobei der Begriff Farbstoff auch Pigmente umfassen soll. Die Druckfarbe besteht daher wenigstens aus einem laserentwickelbaren Farbstoff und einem Druckfarbenbindemittel, wenn dieses lösungs-mittelfrei verwendet werden kann, wie z. B. in der DE 197 15 695 A1 offenbart. Häufig sind zusätzlich Lösungsmittel anwesend, z. B. niedere Alkohole oder Ester. Die Druckfarbe kann außerdem als ein System von zusammen wirkenden Stoffen vorliegen. Solche Systeme sind als solche bekannt und aufeinander abgestimmt. Die laserentwickelbare Druckfarbe kann daher zusätzlich für die Entwicklung des Farbstoffs notwendige oder förderliche Zusätze oder auch Stabilisatoren enthalten, wie z. B. aus der EP 97 220 B1 bekannt.

Der Farbstoffanteil in der laserentwickelbaren Druckfarbe beträgt vorzugsweise zwischen 10 und 90 Gew.-%, vorzugsweise 10 bis 60 Gew.-%.

Erfindungsgemäß erfolgt der Auftrag der laserentwickelbaren Druckfarbe auf wenigstens eine Folienschicht der Polymerfolie teilflächig, und zwar vorzugsweise in Form eines zusammenhängenden Feldes oder einer gewählten Druckform. Die laserentwickelbaren Farbstoffe und/oder Pigmente können, wie oben schon beschrieben, sehr vorteilhaft in für den Folien-Verpackungsdruck übliche Druckfarbenbindemittel eingearbeitet werden und in einem üblichen Druckverfahren (z. B. Tiefdruck oder Flexodruck) aufgebracht werden. Der Auftrag muss nicht größer sein, als für die einzelindividuelle Markierung notwendig, so dass der Verbrauch an Farbstoff/Pigment sehr sparsam ist. Gleichzeitig erfolgt aber der Auftrag des Farbstoffs im Vergleich mit der Dotierung einer ganzen Folienschicht sehr konzentriert, so dass eine gute Druckschärfe erreicht werden kann.

Für die spätere Beschriftung ist vorzugsweise eine Steuermarkierung in Zuordnung zu dem oder den Feldern oder Druckformen der laserempfindlichen Beschichtung vorgesehen. Sollte die Position für die Lasermarkierung sich jedoch in bestimmter Relation zu einem mit Druckmarkierung versehenen Druckbild auf der Folie befinden, kann die Druckmarkierung auch für die Lasermarkierung mit verwendet werden. Die Notwendigkeit für eine eigene Steuermarkierung entfällt dann.

Überraschenderweise ist das Laserbeschriften bzw. -markieren einer so vorbereiteten Verpackungsfolie unmittelbar an der Verpackungsmaschine möglich, ohne dass die polymeren Schichten der Verpackungsfolie geschädigt oder gar zerstört würden. Die individuelle Beschriftung kann auch nachträglich erfolgen, z.B. an einem mit der Folie verbundenen Produkt, wie einer mit der Folie kaschierten Karte oder einem anderen, beliebigen durch direktes Aufkaschieren der Folie geschützten Produkt.

Viele Pigmente aber auch Farbstoffe ändern die Farbe durch Veränderung des Oxidationszustandes im Pigment oder in der Farbe. Der Farbumschlag wird dabei häufig durch einen elektrochemischen Prozess bewirkt. Die Energiedichte für den Farbumschlag beträgt typischerweise zwischen 0,1 und 1 J/cm². Die einzelnen durch den Laserstrahl erfassten Farbpunkte werden mit wenigen Watt (< 10 Watt, i.a. zwischen 1 und 5 Watt) in Bruchteilen von Millisekundenbereichen (0,1 bis 100 ms) gefärbt. Durch die hohe Farbstoffdichte wird die eingebrachte Energie pro Volumeneinheit gut absorbiert. Der Laser kann daher so geführt werden, dass eine unterliegende Polymerschicht nicht merklich geschädigt wird.

Erfindungsgemäß ist die laserempfindliche Beschichtung als Konterdruck hinter einer transparenten Deckschicht der mehrschichtigen Polymerfolie angeordnet. Derartige Konterdruckverfahren sind grundsätzlich bekannt. Auch hier kann zusätzlich ein Druckbild mit konventionellen Druckfarben vorliegen. Die laserempfindliche Beschichtung kann in einem nicht bedruckten Bereich oder Fenster oder nun unterhalb einer farbigen, vorzugsweise hellen oder weißen Druckschicht liegen. Gleichzeitig ist die individuelle, produktspezifische Beschriftung oder Markierung durch die Deckfolie geschützt, sowohl gegen ungewollte Beschädigung, z. B. Verkratzen, als auch gegen nachträgliche Manipulationen an der Beschriftung oder Markierung. Die Erfindung ist besonders interessant für Lebensmittelverpackungen, um Chargennummern, Verfallsdaten und dergl. vor Manipulation zu schützen.

Da die transparente Deckschicht - die ihrerseits aus mehreren transparenten Schichten bestehen könnte - mit dem Laser durchstrahlt werden muss, ist es erforderlich, dass die transparente Deckschicht das Laserlicht zumindest deutlich weniger absorbiert als die laserentwickelbare Druckfarbe. Dies ist jedoch ohne weiteres zu erreichen, wenn eine nicht zu kurzwellige Laserwellenlänge gewählt wird, und die transparente Deckfolie entsprechend ausgewählt wird. Dabei kommt der Erfindung entgegen, dass das Laserlicht umso weniger absorbiert wird, je klarer und transparenter die Folie ist (auch Streuung führt zu zusätzlicher Absorption), was für ein klares Druckbild auch der Laserbeschriftung ohnehin erwünscht ist.

Es wird ein laserempfindlicher Farbstoff oder ein laserempfindliches Pigment ausgewählt, das bei Bestrahlung in einem Wellenlängenbereich zwischen 400 und 12000 nm einen Farbumschlag erleidet. Oberhalb 400 nm sind jedoch alle polyolefinischen und viele andere transparente Folien (PE, PP, PA, PET, insbesondere mono- oder biaxial orientiert) hinreichend lichtdurchlässig, so dass keine Schädigung der Folie aufgrund der Durchstrahlung zu erwarten ist. Schädigungen aufgrund von Erwärmungen der Folie durch die Absorption der Laserenergie im Farbstoff können durch genaue Einstellung der durch den Laser zugeführten Energie vermieden werden.

Als Markierungslaser kommen in Anbetracht des gewünschten Wellenlängenfensters insbesondere CO₂-Laser, speziell Klasse 4-CO₂-Laser (10600 nm), Argon Laser (Schwerpunkt 514 nm, 488 nm), Festkörperlaser, insbesondere Dioden-gepumpte Festkörper-Laser, wie z. B. in der Analytik üblich, zum Einsatz.

In besonders vorteilhafter Ausführungsform besteht die transparente Deckschicht aus Polyamiden (PA), Polyestern (insbesondere PET), polyolefinischen oder überwiegend polyolefinischen Polymeren, insbesondere Polyethylen (PE), Polypropylen (PP), Polybutylen (PB), sowie Mischungen oder Copolymeren mit oder zwischen den vorgenannten Polymeren. Weiterhin ist bevorzugt, dass es sich um mono- oder biaxial orientierte oder teilorientierte (gereckte) Folien handelt. Besonders bevorzugt ist Polypropylen Homopolymer, insbesondere biaxial orientiertes (BOPP).

Wie dem Fachmann bekannt, können alle Folienschichten des Aufbaus von Polymerfolien Zusätze, wie Stabilisatoren, Antistatika, Gleitmittel und dergleichen enthalten. Der Grundaufbau der Folie wird durch die zusätzliche Beschichtung mit der laserentwickelbaren Druckfarbe praktisch nicht beschränkt. Insbesondere kann die Folie auf wenigstens einer Seite eine Siegelschicht besitzen, was für die Herstellung bestimmter Verpackungsformen mit Hilfe der erfindungsgemäßen Polymerfolie erforderlich ist, oder zum Aufsiegeln der Folie direkt auf zu schützende und zu markierende (Kunststoff) Produkte geschützt werden kann.

Die Dicke der Deckschicht oder mehrerer verbundener Deckschichten kann insgesamt im Bereich von 5 µm bis 50 µm, insbesondere 7 µm bis 25 µm oder weiter vorzugsweise von 12 bis 20 µm liegen.

Der in der lasermarkierbaren Druckfarbe zu verwendende Binder ist vorzugsweise ein optisch transparenter Druckfarbenbinder, insbesondere wie im Verpackungsdruck und ist als solcher bekannt. Der Binder sollte gute Haftungseigenschaften zu der Folienschicht besitzen, auf die die laserempfindliche Beschichtung aufgetragen wird, bzw. zu beiden umgebenden Schichten, wenn eine Deckschicht vorhanden ist.

Bevorzugt wird der Binder ausgewählt aus der Gruppe: Nitrocellulose, PVB (Polyvinylbutyrat), PVC (Polyvinylchlorid), PVC-Copolymer, PU (Polyurethan), PU-Copolymer, Polyester, Lacke und Lackharze, speziell solche wie im Verpackungsdruck bekannt.

Die Erfindung umfasst entsprechend auch ein Verfahren zur Herstellung der oben beschriebenen Polymerfolie, bei welchem eine transparente Deckschicht mit einer laserentwickelbare Druckfarbe, die einen laserstrahlungsempfindlichen Farbstoff und ein Bindemittel enthält, wenigstens im Bereich eines zusammenhängenden Feldes oder Motivs von ihrer Rückseite bedruckt wird und die Deckschicht im späteren Verarbeitungsverlauf mit einer vorzugsweise mehrschichtigen Polymerfolie oder einer Unterlage durch Laminieren oder Kaschieren verbunden wird.

Ein ganz wesentlicher Vorteil des erfindungsgemäßen Verfahrens, das u.a. die Herstellung später auf der Verpackungsmaschine individuell markierbarer Verpackungen ermöglicht, liegt darin, dass der Aufbau der Verpackungsfolie als solcher, der durch die Anforderungen an die Verpackungsqualität und die Art des zu verpackenden Gutes bestimmt wird, praktisch nicht tangiert wird.

Durch die Konzentration des Farbstoffs in der laserentwickelbaren Druckfarbe wird ein qualitativ besonders gutes Druckbild möglich, das mit einer dotierten Folienschicht nicht erreichbar erscheint. Dieselbe Folienschicht, die mit der laserentwickelbaren Druckfarbe bedruckt wird, kann zusätzlich und vorzugsweise zuvor mit einem üblichen Druckbild bedruckt werden. Die Gestaltungsmöglichkeiten sind durch diese Technik besonders vielfältig.

Das Verfahren und die zugehörige Folie ermöglichen u.a. die Herstellung einer Verpackung mit einer teilflächigen Beschichtung aus einer laserempfindlichen laserentwickelbaren Druckfarbe, die in Form wenigstens eines zusammenhängenden Feldes oder Motivs für die individuelle verpackungsspezifische - insbesondere während des Verpackungsvorgangs oder auch nachträglich an der fertigen Verpackung vorzunehmende - Beschriftung oder Markierung zwischen Deckschicht und darunter liegender Schicht angebracht ist. Die Verpackung kann beispielsweise eine Verpackung für Lebensmittel, Medikamente oder Zigaretten sein.

Ob die Beschriftung in Zuordnung zum Verpackungsvorgang oder später an der fertigen Verpackungseinheit, bzw. dem aus der Folie hergestellten Produkt vorgenommen wird, richtet sich u.a. nach Art und Zweck der Beschriftung oder Markierung.

Das Verfahren und die zugehörige Folie ermöglichen weiter die Herstellung eines kaschierten Produkts durch Aufkaschieren der mehrschichtigen Polymerfolie auf eine Unterlage, wobei sich die teilflächige Beschichtung in Form wenigstens eines zusammenhängenden Feldes oder Motivs aus einer laserempfindlichen Druckfarbe unter einer optisch transparenten polymeren Deckschicht befindet.

Im Folgenden wird die Erfindung anhand von Beispielen näher erläutert, die die Ausführungsmöglichkeiten für die Erfindung besser illustrieren sollen.

### BEISPIELE

### (Beispiele 1 und 2 gestrichen)

### A. Zusammensetzung der laserentwickelbaren Druckfarbe:

| | |
|---|---|
| Rezeptur 1: | laserentwickelbares Pigment, z.B. Datalase^{®} (Sherwood Technology), Binder: PVC, Lösungsmittel: Ethylacetat |
| Rezeptur 2: | laserentwickelbares Pigment, z.B. Datalase^{®}, Binder NC, Lösemittel Ethylacetat, Verhältnis Pigment:Binder jeweils etwa zwischen 10:90 und 90:10 |

Aufbau einer mehrschichtigen Verpackungsfolie:

### B. Beispiel 3

### Folie 1:

20 µm BOPP-Folie oder transparenter Verbund wenigstens teilweise aus gereckten Folien (coextrudiert), bedruckt bzw. teilbeschichtet mit der laserentwickelbaren Druckfarbe:

| | |
|---|---|
| 3a: | streifenförmig fortlaufend auf die bahnförmige Verpackungsfolie längs zur Laufrichtung; |
| 3b: | im Rapportdruck in Form eines sich wiederholenden, beispielsweise rechteckigen Feldes oder in einer anderen Druckform in Zuordnung zu einer Steuermarkierung; |
| 3c: | wie 1b, zusätzlich auf ein oder in eine Ebene mit einem ein- oder mehrfarbigen Druckbild in Zuordnung zu der Druckmarkierung des Druckbildes; |
| 3d: | wie 1b bei Verwendung der laserentwickelbaren Druckfarbe als eine der Farben in einem Verpackungs-Mehrfarbendruck. |

### Folie 2:

12 µm PET-Folie, kaschiert mit 3,5 µm lösemittelhaltigem 2K-PUR-Kaschier-Klebstoff gegen eine 40 µm PE-Folie (LDPE).

Die Verpackungs-Verbundfolie aus Folie 1 und Folie 2 wird erhalten durch Kaschieren der Druckseite der Folie 1 (Konterdruck) mit handelsüblichem Polyurethyan-Kaschierkleber gegen die PET-Schicht der Folie 2.

### Beispiel 4

Folie 1 aus Beispiel 3 aufkaschiert auf eine Unterlage aus Holz, Pappe, Papier oder Hartkunststoff (z.B. Kunststoffkarte).

### Lasermarkierung

An den Folien gemäß Beispielen 3 und 4 wurde mit einem Klasse 4 CO₂₋Laser (10600 nm), Ausgangsleistung 10 Watt, Arbeitsleistung 5 W (50 %) eine Laserbeschriftung vorgenommen. Die Beschriftung war gut konturiert und lesbar. An der Folie wurden keine Schäden, wie z. B. Blasen, Oberflächenwellung oder Schichtenthaftung festgestellt. Die Schwärzungsdauer/Verweiltzeit pro Dot (bei gepulstem Betrieb) betrug ca. 0,00015 sec.

## Patentansprüche

1. Polymerfolie, die mehrschichtig aufgebaut ist, mit einer teilflächigen Beschichtung wenigstens einer Folienschicht mit einer laserentwickelbaren Druckfarbe, die einen laserempfindlichen Farbstoff enthält, der durch Bestrahlung bei Wellenlänge zwischen 400 und 12000 nm einen Farbumschlag erleidet, und die ein Bindemittel enthält, als Konterdruck hinter einer transparenten Polymerdeckschicht.

2. Polymerfolie nach Anspruch 1, **dadurch gekennzeichnet, dass** die Beschichtung in Form eines zusammenhängenden Feldes oder einer gewählten Druckform vorliegt.

3. Polymerfolie nach Anspruch 1 oder 2, **dadurch gekennzeichnet, dass** in Zuordnung zu dem oder den Feldern oder Druckformen eine Steuermarkierung angeordnet ist.

4. Polymerfolie nach einem der Ansprüche 1 bis 3, **dadurch gekennzeichnet, dass** die transparente Deckschicht aus orientiertem Polymer, vorzugsweise orientiertem Polyolefin, vorzugsweise orientiertem Polypropylen, weiter vorzugsweise biaxial orientiertem Polypropylen (BOPP) besteht.

5. Polymerfolie nach einem der Ansprüche 1 bis 4, **dadurch gekennzeichnet, dass** der Binder ein optisch transparenter Druckfarbenbinder für Verpakkungsdruck ist.

6. Polymerfolie nach einem der Ansprüche 1 bis 5, **dadurch gekennzeichnet, dass** der Binder ausgewählt ist aus der Gruppe: Nitrocellulose, PVB, PVC, PVC-Copolymer, PU, PU-Copolymer, Lacke und Lackharze für Verpackungsdruck.

7. Verfahren zur Herstellung einer Polymerfolie nach einem der Ansprüche 1 bis 6, **dadurch gekennzeichnet, dass** eine transparente Deckschicht mit einer laserentwickelbare Druckfarbe, die einen laserstrahlungsempfindlichen Farbstoff und ein Bindemittel enthält, wenigstens im Bereich eines zusammenhängenden Feldes oder Motivs von ihrer Rückseite bedruckt wird und die Deckschicht im späteren Verarbeitungsverlauf mit einer vorzugsweise mehrschichtigen Polymerfolie oder einer Unterlage durch Laminieren oder Kaschieren verbunden wird.

8. Verfahren nach Anspruch 7, **dadurch gekennzeichnet, dass** dieselbe Folienschicht, die mit der laserentwickelbaren Druckfarbe bedruckt wird, zusätzlich und vorzugsweise zuvor mit einem üblichen Druckbild versehen wird.

9. Verpackung, erhalten unter Verwendung einer Polymerfolie nach einem der Ansprüche 1 bis 6, mit einer teilflächigen Beschichtung, die in Form wenigstens eines zusammenhängenden Feldes oder Motivs aus einer laserempfindlichen laserentwickelbaren Druckfarbe für die individuelle verpackungsspezifische Beschriftung oder Markierung zwischen Deckschicht und darunterliegender Schicht angebracht ist.

10. Kaschiertes Produkt, erhalten unter Verwendung einer Polymerfolie nach einem der Ansprüche 1 bis 6 durch Aufkaschieren dieser Folie auf eine Unterlage, wobei sich die teilflächige Beschichtung in Form wenigstens eines zusammenhängenden Feldes oder Motivs aus einer laserempfindlichen Druckfarbe unter einer optisch transparenten polymeren Deckschicht befindet.

## Claims

1. A polymer film, which is multilayered, having on part of the surface of at least one film layer a coating with a laser-developable printing ink containing a laser-sensitive dye, which undergoes a color change by irradiation at a wavelength between 400 and 12000 nm, and containing a binding agent, as reverse printing behind a transparent polymer covering layer.

2. A polymer film according to claims 1, **characterized in that** the coating is in the form of a continuous area or a selected printing block.

3. A polymer film according to claim 1 or claim 2, **characterized in that** a control mark is arranged in association with the area(s) or the printing blocks.

4. A polymer film according to any one of claims 1 to 3, **characterized in that** the transparent covering layer consists of an oriented polymer, preferably oriented polyolefin, preferably oriented polypropylene, more preferably biaxially oriented polypropylene (BOPP).

5. A polymer film according to any one of claims 1 to 4, **characterized in that** the binder is an optically transparent printing ink binder for package printing.

6. A polymer film according to any one of claims 1 to 5, **characterized in that** the binder is selected from the group: nitrocellulose, PVB, PVC, PVC copolymer, PU, PU copolymer, varnishes and varnish resins for package printing.

7. A method for producing a polymer film according to any one of claims 1 to 6, **characterized in that** a transparent covering layer having a laser-developable printing ink containing a laser radiation-sensitive dye and a binding agent is printed from its backside at least in the region of a continuous area or motif, and the covering layer is bonded during subsequent processing to a preferably multilayered polymer film or a backing by means of laminating.

8. A method according to claim 7, **characterized in that** same film layer, which is printed with the laser-developable printing ink, is beforehand additionally and preferably provided with a customary printed image.

9. A package obtained using a polymer film according to any one of claims 1 to 6 having on part of the surface a coating, which is applied in the form of at least one continuous area or motif of a laser-sensitive, laser-developable printing ink for the individual, packaging-specific inscription or marking between covering layer and subjacent layer.

10. A laminated product obtained using a polymer film according to any one of claims 1 to 6 by laminating this film onto a backing, the coating on part of the surface in the form of at least one continuous area or motif of a laser-sensitive printing ink being located under an optically transparent polymeric covering layer.

## Revendications

1. Film polymère constitué de plusieurs couches, au moins une des couches dudit film étant revêtue, sur une partie de sa surface, d'une encre d'imprimerie pouvant être développée au laser, ladite encre contenant un colorant sensible au laser, ledit colorant subissant un changement de couleur lors qu'il est exposé à un rayonnement d'une longueur d'onde comprise entre 400 et 12000 nm, et contenant un liant, l'élément imprimé étant réalisé sur la face intérieure, derrière une couche de couverture transparente en polymère.

2. Film polymère selon la revendication 1, **caractérisé en ce que** le revêtement se présente sous forme d'une étendue continue ou d'un motif d'impression choisi.

3. Film polymère selon les revendications 1 ou 2, **caractérisé en ce qu'**un marquage de direction est disposé en correspondance avec la/les étendue(s) ou les motifs d'impression.

4. Film polymère selon l'une des revendications 1 à 3, **caractérisé en ce que** ladite couche de couverture transparente est constituée d'un polymère orienté, de préférence d'une polyoléfine orientée, s'agissant préférentiellement de polypropylène orienté et encore plus préférentiellement de polypropylène orienté biaxialement (BOPP).

5. Film polymère selon l'une des revendications 1 à 4, **caractérisé en ce que** ledit liant est un liant d'encre d'imprimerie transparent destiné au domaine de l'impression sur emballages.

6. Film polymère selon l'une des revendications 1 à 5, **caractérisé en ce que** ledit liant est choisi dans le groupe suivant : nitrocellulose, PVB, PVC, copolymère de PVC, PU, copolymère de PU, vernis et résines pour vernis, destinés au domaine de l'impression sur emballages.

7. Procédé de fabrication d'un film polymère selon l'une des revendications 1 à 6, **caractérisé en ce que** la face arrière d'une couche de couverture transparente est imprimée, au moins dans la zone d'une étendue continue ou d'un motif, avec une encre d'imprimerie pouvant être développée au laser, ladite encre contenant un colorant sensible au rayonnement laser et un liant, ladite couche de couverture étant ultérieurement liée à un film polymère préférentiellement multicouche ou à un support par un procédé de laminage ou de contre-collage.

8. Procédé selon la revendication 7, **caractérisé en ce que** la couche du film étant imprimée avec ladite encre d'imprimerie pouvant être développée au laser est en outre pourvue, de préférence préalablement, d'un motif d'impression habituel.

9. Emballage obtenu en mettant en oeuvre un film polymère selon l'une des revendications 1 à 6, avec un revêtement qui est présent sur une partie de sa surface, ledit revêtement étant disposé sous forme d'au moins une étendue continue ou d'un motif réalisé(e) en encre d'imprimerie sensible au laser et pouvant être développée au laser, pour ainsi réaliser, entre la couche de couverture et la couche sous-jacente, une inscription ou un marquage individuel(le) et spécifique audit emballage.

10. Produit contre-collé, obtenu en mettant en oeuvre un film polymère selon l'une des revendications 1 à 6, ledit film étant apposé par contre-collage sur un support, ledit revêtement étant présent sur une partie de la surface et étant situé, sous forme d'au moins une étendue continue ou d'un motif constitué(e) d'encre d'imprimerie sensible au laser, sous une couche de couverture transparente en polymère.
